# EUROPÄISCHE PATENTSCHRIFT

(11) **EP 3 145 323 B1**
(45) Veröffentlichungstag und Bekanntmachung des Hinweises auf die Patenterteilung: **18.11.2020**
(21) Anmeldenummer: 15723233.1
(22) Anmeldetag: 19.05.2015
(51) Int. Cl.: A23K 10/10, A23K 50/00

(54) **VERFAHREN ZUR HERSTELLUNG EINES HALBFEUCHTEN FUTTERMITTELPRODUKTS UND HALBFEUCHTES FUTTERMITTELPRODUKT FÜR FLEISCHFRESSENDE TIERE**
METHOD FOR PRODUCING A SEMI-MOIST ANIMAL FEED PRODUCT AND SEMI-MOIST ANIMAL FEED PRODUCT FOR CARNIVOROUS ANIMALS
PROCÉDÉ DE FABRICATION D'UN ALIMENT POUR ANIMAUX SEMI-HUMIDE ET ALIMENT POUR ANIMAUX SEMI-HUMIDE POUR CARNASSIERS

(30) Priorität: 19.05.2014 DE 102014107055
(43) Veröffentlichungstag der Anmeldung: 29.03.2017
(73) Patentinhaber: Deuerer, Hans-Jürgen, 75015 Bretten (DE)
(72) Erfinder: Deuerer, Hans-Jürgen, 75015 Bretten (DE)
(74) Vertreter: Gramm, Lins & Partner Patent- und Rechtsanwälte PartGmbB
(86) Internationale Anmeldenummer: PCT/EP2015/060986
(87) Internationale Veröffentlichungsnummer: WO 2015/177142

(56) Entgegenhaltungen:
- DE-A1- 2 543 402
- DE-A1-102009 023 481
- US-A1- 2005 244 554
- US-A1- 2011 217 419
- US-B1- 6 465 037
- H.D. Belitz ET AL: "Food Chemistry - Chapter 12.7.2.2 Sausages" In: "Food Chemistry - Chapter 12.7.2.2 Sausages", 1. Januar 2009 (2009-01-01), Berlin, XP055204362, Seiten 599-601, Absatz [12.7.2.2.1]; Abbildung 12.32; Tabelle 12.20

## Beschreibung

Die Erfindung betrifft ein Verfahren zur Herstellung eines halbfeuchten Futtermittelprodukts. Des Weiteren betrifft die Erfindung ein halbfeuchtes Futtermittelprodukt erhältlich durch das erfindungsgemäße Verfahren sowie die Verwendung des erfindungsgemäßen halbfeuchten Futtermittelprodukts als Futter für fleischfressende Tiere.

Fleischfresser wie Hund und Katze, die als Haustiere gehalten werden, werden häufig nicht artgerecht ernährt.

In der Natur ernähren sich diese Tierarten hauptsächlich von Beutetieren, also durch die Aufnahme tierischer Proteine in Form von Fleisch.

Es ist ernährungsphysiologisch sinnvoll, bei der Bereitstellung für Futtermittel für fleischfressende Tiere einen hohen Proteingehalt bei gleichzeitig niedrigem Kohlenhydratgehalt vorzusehen.

Neben dem als Hauptmahlzeit verfütterten Hauptfutter in Form von Trocken-, Halbfeucht- oder Feuchtfutter werden zunehmend auch Snacks vom Verbraucher nachgefragt, die sogar für besondere Funktionen wie zur Gebisspflege bzw. zu Erziehungs- und Ausbildungszwecken eingesetzt werden sollen.

Fleischfresser, die nicht artgerecht ernährt werden, haben unter anderem eine erhöhte Anfälligkeit für Stoffwechselerkrankungen.

Die US 2005/0244554 A1 beschreibt ein Kauspielzeug für Tiere.

US 2011/0217419 A1 betrifft ein fressbares Kauspielzeug für Tiere.

Entsprechend ist es wünschenswert, ein ernährungsphysiologisch geeignetes Futtermittel - insbesondere zur Verwendung als Snack - bereitzustellen, das von Fleischfressern gut akzeptiert wird.

Gelöst wird die Aufgabe durch ein Verfahren zur Herstellung eines halbfeuchten Futtermittelprodukts für fleischfressende Tiere gemäß Anspruch 1 wobei zeitgleich mehrere Futtermittel-Vorprodukte unterschiedlicher Zusammensetzungen bereitgestellt werden, die ein- oder mehrsträngig ausgeformt werden, dadurch gekennzeichnet, dass
a. ein Kutter zur Herstellung eines Futtermittel-Vorprodukts mit wenigstens folgenden Zutaten beschickt wird, die eine Temperatur aufweisen, die gleich oder geringer ist als +25°C: wenigstens ein Bestandteil der Gruppe Fleisch,
b. die Zutaten zu einem Futtermittel-Vorprodukt mit einem Feuchtigkeits-Gehalt zwischen 30 Gew.-% und 60 Gew.-% gekuttert werden,
c. das gekutterte Futtermittel-Vorprodukt ohne Anwendung von Hitze zum halbfeuchten Futtermittelprodukt ausgeformt und
d. gegebenenfalls das ausgeformte Futtermittel-Vorprodukt getrocknet wird, bis ein Feuchtigkeitsgehalt zwischen 15 Gew.-% und 50 Gew.-%, insbesondere zwischen 20 Gew.-% und 40 Gew.-%, erreicht ist.

Durch das erfindungsgemäße Verfahren wird ein Futtermittelprodukt bereitgestellt, das sich durch eine besonders hohe Akzeptanz bei Fleischfressern auszeichnet. Überraschenderweise wurde herausgefunden, dass das erfindungsgemäße Verfahren zu einer besonders weichen (soften) Textur des fleischbasierten Futtermittelproduktes führt. Insbesondere die Ausformung ohne Hitze, wie bei Temperaturen zwischen 1°C und 30°C, insbesondere bei Raumtemperatur, führt überraschenderweise zu der besonderen Weichheit (Softigkeit) des erfindungsgemäßen halbfeuchten Futtermittelprodukts, denn das Eiweiß wird nur durch das Kuttern aufgeschlagen, d.h. durch die spezielle Verwendung des Kutters zum Zerkleinern des Fleisches werden die Zellstrukturen aufgebrochen und Proteine werden denaturiert, und es werden Strukturen ausgebildet wie sie z.B. beim Aufschlagen von Eiweiß ausgebildet werden.

Unter dem Ausdruck "Anwendung ohne Hitze" wird vorliegend verstanden, dass keine Wärme dem Vorprodukt während und/oder vor dem Ausformen zugeführt wird. Die Ausformung findet z. B. bei Temperaturen von 1°C bis 30°C statt, z. B. 15°C bis 25°C.

Unter einem "halbfeuchten Futtermittelprodukt" wird ein Futtermittelprodukt verstanden, das einen Gehalt von etwa 15 Gew.-% bis etwa 50 Gew.-% Wasser sowie von mindestens 30 Gew.-% an Fleisch, bezogen auf das Gesamtgewicht des Futtermittel-Vorprodukts beziehungsweise des Futtermittelprodukts, enthält.

Unter "Fleisch" werden alle Fleischteile geschlachteter warmblütiger Landtiere, frisch oder durch ein geeignetes Verfahren haltbar gemacht, sowie alle zur Tierfutterverarbeitung zugelassenen Erzeugnisse aus der Verarbeitung von Tierkörpern von Landtieren verstanden.

Der Fleischanteil im Futtermittel-Vorprodukt liegt in einer vorteilhaften Ausführungsform zwischen 30 Gew.-% und 95 Gew.-%, insbesondere zwischen 40 Gew.-% und 80 Gew.-%, weiter insbesondere zwischen 60 Gew.-% und 70 Gew.-%. Diese Ausführungsform bietet den Vorteil, dass das halbfeuchte Futtermittelprodukt von den Tieren gern gefressen wird, wobei die Akzeptanz mit zunehmendem Fleischanteil weiter steigt.

In einer vorteilhaften Ausführungsform wird das halbfeuchte fleischbasierte Futtermittelprodukt mittels eines Schneckenformers, insbesondere eines Schneckenformers der Firma Rheon®, ausgeformt. Überraschenderweise konnte nach dieser Art der Ausformung eine weitere Verbesserung der Akzeptanz des verfütterten Produkts beobachtet werden.

In einer weiteren vorteilhaften Ausführungsform weisen die Zutaten zur Herstellung des Futtermittel-Vorprodukts eine Temperatur zwischen -18°C und +7°C auf. Diese Ausführungsform bietet den Vorteil, dass die Zeit, die zum Kuttern benötigt wird, bis das im Futtermittel-Vorprodukt befindliche Eiweiß aufgeschlagen ist (d.h. durch die Zerstörung der Zellmembran werden die Proteine denaturiert) und ein gebundenes Futtermittel-Vorprodukt entsteht, lediglich etwa 5 bis 15 Minuten, wie z.B. von 5 bis 10 Minuten beträgt. Entsprechend ist das Verfahren besonders wirtschaftlich im Hinblick auf die aufzuwendende Zeit und Energie. Durch das Kuttern entsteht bei dieser Ausführungsform ein Futtermittel-Vorprodukt, dessen Temperatur bis zu etwa 15°C beträgt.

In einer anderen vorteilhaften Ausführungsform erfolgt eine zusätzliche Kühlung, beispielsweise durch die Zugabe von Eis oder durch eine Kühlung des Kutters mittels Kühlelementen, so dass eine Temperatur von maximal etwa 5°C erreicht wird. Bei einer Temperatur von maximal etwa 5°C des entstehenden Futtermittel-Vorprodukts ist dieses in seiner Textur besonders homogen.

Unter "Kutter" und "kuttern" wird vorliegend verstanden, dass die im Kutter vorliegenden Bestandteile fein- und feinstverkleinert werden. Das heißt die Korngrößenverteilung liegt im Bereich von 10 mm bis 0,1 mm oder kleiner. Das Kuttern zeichnet sich durch einen Prozess aus, bei dem bei möglichst vielen Zellen die Zellmembranen geschädigt werden, um so eine feine, gleichmäßige Masse zu erhalten. Dem Fachmann sind entsprechende "Kutter" oder engl. "Cutter" bekannt. Dabei werden die Messer mit einer Geschwindigkeit von mindestens 60 Umdrehungen pro Minute, wie z.B. mindestens 200 Umdrehungen pro Minute z.B. mindestens 2860 Umdrehungen pro Minuten verwendet. So findet ein zumindest teilweises Denaturieren der Proteine während des Kutterns statt.

Der Feuchtigkeitsgehalt des Futtermittel-Vorprodukts kann vorteilhafterweise zwischen 40 Gew.-% und 50 Gew.-% liegen. Der Vorteil, ein Futtermittel-Vorprodukt mit diesem Feuchtigkeitsgehalt zwischen 40 Gew.-% und 50 Gew.-% einzusetzen, liegt darin, dass keine oder nur eine sehr kurze Trocknung notwendig ist. Dabei bleiben die Nährstoffe im halbfeuchten Futtermittelprodukt möglichst umfangreich erhalten bleiben können.

In einer anderen vorteilhaften Ausführungsform erfolgt die Trocknung des ausgeformten Futtermittel-Vorprodukts bis ein Feuchtigkeitsgehalt zwischen 5 Gew.-% und 40 Gew.-% erreicht ist, insbesondere bei einer Temperatur zwischen 90°C und 200°C. In dem Temperaturbereich zwischen 90°C und 200°C stehen die Zeit, die benötigt wird um einen Feuchtigkeitsgehalt zwischen 5 Gew.-% und 40 Gew.-% zu erreichen und die für die Trocknung aufzuwendende Energie in einem günstigen Verhältnis.

Zum Beispiel kann die Trocknung des ausgeformten Futtermittel-Vorprodukts bis ein Feuchtigkeitsgehalt zwischen 5 Gew.-% und 40 Gew.-% erreicht ist vorteilhafterweise bei etwa 135°C erfolgen. Überraschenderweise wurde gefunden, dass in diesem Temperaturbereich das Verhältnis zwischen wirtschaftlich günstiger Trocknung und Erhalt der Nährstoffe im erfindungsgemäßen halbfeuchten Futtermittelprodukt am höchsten ist.

In einer weiteren vorteilhaften Ausführungsform wird das halbfeuchte fleischbasierte Futtermittelprodukt mittels eines Schneckenformers, insbesondere eines Schneckenformers der Firma Rheon®, ausgeformt. Überraschenderweise konnte nach dieser Art der Ausformung eine weitere Verbesserung der Akzeptanz des verfütterten Produkts beobachtet werden.

In einer anderen vorteilhaften Ausführungsform werden die Zutaten zur Herstellung des Futtermittel-Vorprodukts vollständig oder teilweise gefroren eingesetzt. Überraschenderweise konnte festgestellt werden, dass ein solches Futtermittel-Vorprodukt bei der Ausformung eine besonders akzeptierte Textur ergibt.

In einer weiteren vorteilhaften Ausführungsform werden die Zutaten zur Herstellung des Futtermittel-Vorprodukts vor dem Beschicken des Kutters mittels Führung durch eine oder mehrere Lochscheiben zerkleinert. Es hat sich vorliegend gezeigt, dass eine Zerkleinerung vor dem Vorgang des Kutterns zu einem homogeneren Futtermittel-Vorprodukt führt und in Folge dessen der Vorgang des Kutterns nicht übermäßig ausgedehnt werden muss, sodass die tierischen Proteine bestmöglich erhalten bleiben.

In einer anderen vorteilhaften Ausführungsform werden den Zutaten zur Herstellung des Futtermittel-Vorprodukts vor dem Kuttern ein oder mehrere Bestandteile der Gruppe: Gemüse, Getreide, Kartoffeln, Glycerin, Lachspulver, Käsepulver, Pansenpulver und/oder Leberwurst zugesetzt.

Diese weiteren Futterbestandteile dienen zum einen einer besseren technischen Verarbeitung des Futters, in dem Sinne, dass das Futtermittel-Vorprodukt leichter zu verarbeiten ist, da es weniger klebt. Überraschenderweise wurde gefunden, dass die Klebrigkeit des Futtermittel-Vorprodukts dadurch gesenkt werden kann, dass die genannten weiteren Futterbestandteile vor dem Vorgang des Kutterns den Zutaten zur Herstellung des Futtermittel-Vorprodukts zugesetzt werden. Zum anderen können beispielsweise tierartspezifische Geschmacksrichtungen erzeugt werden.

In einer anderen vorteilhaften Ausführungsform werden Zusatzstoffe, die in der Futtermittelindustrie üblich sind, beigefügt. Insbesondere handelt es sich dabei um Aromen, natürliche oder synthetische Farbstoffe, inaktivierte Hefen oder Hefeextrakte, Pflanzenextrakte und/oder -konzentrate, Konservierungsstoffe, Zucker und/oder funktionelle Zutaten. Unter funktionellen Zutaten werden beispielsweise Probiotika, aber auch Vitamine, Mineralstoffe, Omega-3-Fettsäuren, probiotische Ballaststoffe und probiotische Mikroorganismen verstanden.

Im Verfahren können Konservierungsstoffe, wie Kaliumsorbat, eingesetzt werden. Beispielsweise kann Kaliumsorbat in einer Konzentration zwischen 0,1 Gew.-% und 1 Gew.-% bezogen auf das Gesamtgewicht des Futtermittel-Vorprodukts eingesetzt werden. Eine Zugabe von Kaliumsorbat in einer Menge von etwa 0,5 Gew.-% bezogen auf das Gesamtgewicht des Futtermittel-Vorprodukts führt zu einer Mindesthaltbarkeit des erfindungsgemäßen halbfeuchten Futtermittelprodukts von etwa 15 bis 18 Monaten.

Zur Verbesserung der Bindung des Futtermittel-Vorprodukts können an tierischen Nebenerzeugnissen insbesondere gekochte Schweineschwarte oder Gelatine eingesetzt werden. Milchprodukte beziehungsweise dessen Eiweiß müssen nicht zugesetzt werden. Dies ist im Hinblick auf mögliche Unverträglichkeiten gegenüber Milchprodukten beziehungsweise Milcheiweiß von Vorteil.

Es werden zeitgleich mehrere Futtermittel-Vorprodukt(e) unterschiedlicher Zusammensetzung hergestellt, die ein- oder mehrsträngig ausgeformt werden. Dieses bietet den Vorteil, dass halbfeuchte Futtermittelprodukte aus einer Kombination von zwei oder noch weiteren Futtermittel-Vorprodukten hergestellt werden können.

Der Vorteil einer mehrsträngigen Ausformung kann darin liegen, dass beispielsweise ein ernährungsphysiologisch besonders wertvolles Futtermittel-Vorprodukt mit einem für die Zieltierart besonders akzeptierten Futtermittel-Vorprodukt kombiniert werden kann.

In einer weiteren vorteilhaften Ausführungsform werden bei mehrsträngiger Ausformung des Futtermittel-Vorprodukts die Stränge ineinander gefahren. Diese Maßnahme ermöglicht eine Vielzahl unterschiedlich ausgeformter Produkte, insbesondere solche, bei denen zwei oder mehrere verschiedene Futtermittel-Vorprodukte im halbfeuchten Futtermittelprodukt konzentrisch angeordnet sind.

In einer anderen vorteilhaften Ausführungsform wird das halbfeuchte Futtermittelprodukt auf eine Temperatur zwischen 10°C und 40°C, insbesondere auf etwa 25°C, zum Beispiel in einem Tunnel, abgekühlt.

Das erfindungsgemäße halbfeuchte Futtermittelprodukt ist durch das erfindungsgemäße Verfahren erhältlich.

In einer vorteilhaften Ausführungsform weist das erfindungsgemäß halbfeuchte Futtermittelprodukt eine Bruchfestigkeit zwischen 28 kPa und 72 kPa und/oder eine Druckfestigkeit zwischen 112 kPa und 129 kPa, auf. Diese Bruchfestigkeit und Druckfestigkeit ist Ausdruck einer besonders weichen Textur, die zu einer entsprechenden Haptik führt.

Zur Prüfung der Bruchfestigkeit wurde die Kraft bestimmt, die erforderlich ist, um die Probe zu durchtrennen. Die Bruchfestigkeit der Probe wurde aus der ermittelten Maximalkraft und der durchtrennten Querschnittsfläche der Probe bestimmt.

Dabei wurde ein Probestück von ca. 26mm Länge und 19mm Breite und einer Höhe von 14mm untersucht. Ein weiteres Probestück wies die Maße von 120mm Länge, 22mm Breite und 14mm Höhe auf. Die Probestücke ist ein Produkt mit zwei Strängen, wobei einer innenliegend angeordnet ist. Die Messung erfolgte bei 20°C und einer rel. Luftfeuchtigkeit von 55%.

Die Geometrie der Platte zur Bestimmung der Bruchfestigkeit war: Breite 80mm, Höhe 80mm mit einer Schneide im Winkel von 45°.

Für die Prüfung der Druckfestigkeit wurde die Kraft bestimmt, die erforderlich ist, einen Zylinder in die Probe einzudrücken, wobei die Deformation der zu testenden Probe 50% der Probenhöhe betrug. Die Druckfestigkeit der Probe wurde aus der ermittelten Maximalkraft und der einwirkenden Zylinderfläche mit einem Durchmesser von 20mm bestimmt, wobei nur Proben mit einer Breite größer 15 mm vermessen wurden.

Die Probe und die Messbedingungen waren identisch zu denen der Prüfung der Bruchfestigkeit.

Das erfindungsgemäße halbfeuchte Futtermittelprodukt weist vorteilhafterweise einen Fettgehalt zwischen 8 Gew.-% und 30 Gew.-%, insbesondere von etwa 13 Gew.-%, einen Proteingehalt zwischen 10 Gew.-% und 40 Gew.-%, insbesondere von etwa 25 Gew.-%, und einen Aschegehalt zwischen 2 und 10 Gew.-%, insbesondere von etwa 6 Gew.-%, sowie einen pH-Wert zwischen 5 und 6, 5 - insbesondere von 5,5 - auf. Der Effekt dieser Zusammensetzung liegt darin, dass ein solches halbfeuchtes Futtermittelprodukt ernährungsphysiologisch für fleischfressende Tiere besonders günstig ist.

In einer vorteilhaften Ausführungsform weist das erfindungsgemäße überwiegend fleischbasierte Futtermittelprodukt einen Feuchtigkeitsgehalt von etwa 33 Gew.-% auf. Halbfeuchte Futtermittelprodukte mit einem Feuchtigkeitsgehalt von etwa 33 Gew.-% weisen eine besonders akzeptierte Textur auf.

In einer anderen vorteilhaften Ausführungsform ist beim erfindungsgemäßen halbfeuchten Futtermittelprodukt bei mehrsträngiger, insbesondere konzentrischer, durch ein Ineinanderfahren der Stränge erzeugter Ausformung, besonders bei Futtermittel-Vorprodukten unterschiedlicher Zusammensetzung, mindestens ein Anteil von mindestens einem inneren Strang auf der Längsseite des halbfeuchten Futtermittelprodukts sichtbar. Diese Ausführungsform führt zu halbfeuchten Futtermittel-Produkten mit einer besonders hochwertigen Anmutung.

In einer weiteren vorteilhaften Ausführungsform liegt das erfindungsgemäße halbfeuchte Futtermittelprodukt zu Würfeln oder zu Quadern geschnitten vor. Überraschenderweise wurde gefunden, dass die besondere "Softigkeit" des erfindungsgemäßen halbfeuchten Futtermittelprodukts der Darreichungsform in Form von Quadern besonders entgegen kommt, d.h., dass die Form solcher Quader zu einem aufgrund der entsprechenden Haptik besonders akzeptierten Produkt führt.

In einer anderen vorteilhaften Ausführungsform ist das halbfeuchte Futtermittelprodukt in einer Folienverpackung, insbesondere in einer gasdichten Folienverpackung, wie einer Schlauchbeutelverpackung oder einer Muldenschalenverpackung, eingeschlossen. Diese Ausführungsform bietet den Vorteil, dass der verfahrenstechnisch bedingte und die Textur des halbfeuchten Futtermittelprodukts bedingende Feuchtigkeitsgehalt über die beabsichtigte Mindesthaltbarkeitsdauer des Produktes erhalten werden kann.

Das halbfeuchte Futtermittelprodukt kann außerdem unter einer Schutzatmosphäre verpackt bzw. versiegelt vorliegen, beispielsweise in einer Atmosphäre unter Anwendung von Stickstoff und/oder Kohlendioxid, so dass eine Mindesthaltbarkeit von 15 bis 18 Monaten gewährleistet ist.

Mit dem vorstehend beschriebenen Verfahren wird ein neues halbfeuchtes Futtermittelprodukt erhalten, das zu mindestens 30 Gew.-%, insbesondere zwischen 30 Gew.-% und 95 Gew.%, weiter insbesondere zwischen 40 Gew.-% und 80 Gew.-%, zum Beispiel zwischen 60 Gew.-% und 70 Gew.-% bezogen auf das Gesamtgewicht des Futtermittel-Vorprodukts ausschließlich aus Fleisch, beispielsweise auch getrocknetem - gegebenenfalls zu Mehl vermahlenem Fleisch - besteht.

Das erfindungsgemäße überwiegend fleischbasierte Futtermittelprodukt kann in stückiger Form, beispielsweise in Form von Happen, vorliegen beziehungsweise erzeugt werden.

Das erfindungsgemäße halbfeuchte Futtermittelprodukt kann mit natürlichen Farbstoffen ein- oder mehrfarbig eingefärbt sein. Es hat sich gezeigt, dass diese Maßnahme die Akzeptanz des Produkts beim Tierhalter weiter erhöht.
Das erfindungsgemäße halbfeuchte Futtermittelprodukt kann außerdem mit anderen Futtermittelprodukten in Verkaufseinheiten vereint oder als gemischtes Futtermittel angeboten werden. Es kann vorteilhafterweise als Katzenfutter, Hundefutter oder Futter für andere fleischfressende Haustiere in Form von Vollfutter oder von Snacks angeboten werden.

Im Folgenden wird die Erfindung anhand eines Ausführungsbeispiels näher beschrieben, das lediglich zur Veranschaulichung einer möglichen Ausführungsform dient und in keiner Weise schutzbeschränkend sein soll.

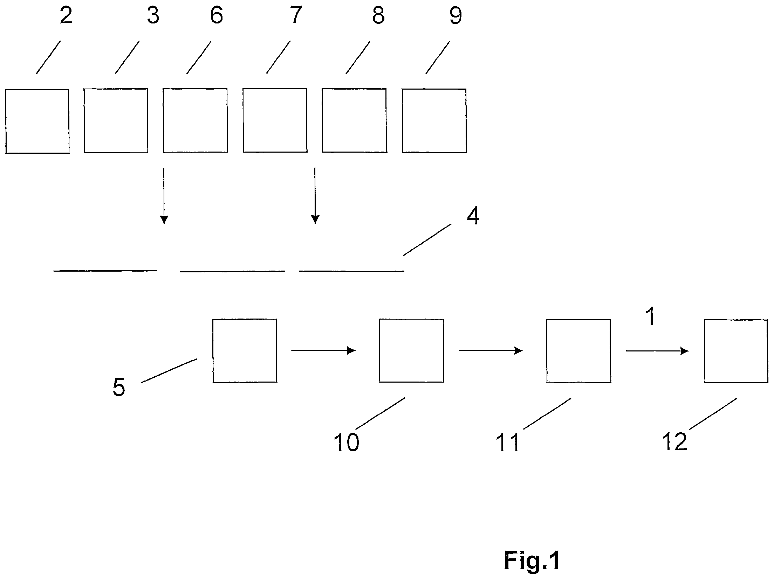

Die einzige Figur 1 zeigt eine schematische Darstellung zur Herstellung eines erfindungsgemäßen halbfeuchten Futtermittelprodukts. Zunächst werden die Zutaten der Gruppe "Fleisch" in den Kutter 5 gegeben. Diese Zutaten befinden sich in den Behältern 2 und ggf. 3 (falls getrennte Behälter z.B. für Fleisch unterschiedlicher Tierarten vorgesehen sind) und werden von dort dem Kutter 5 zugeführt. Daneben befinden sich in weiteren Behältern Gemüse 6 beziehungsweise Getreide 7 beziehungsweise Kartoffeln 8 beziehungsweise Glycerin 9, die den fleischigen Zutaten zugesetzt werden können. Weitere Behältnisse, beispielsweise für Lachspulver, Käsepulver, Pansenpulver und Leberwurst können vorgesehen werden, deren Inhalt über Zuläufe in dem Kutter 5 gelangen kann (die weiteren Behältnisse und deren Zulauf sind in Fig.1 nicht dargestellt). Mit 4 sind Lochscheiben bezeichnet, die dem Kutter 5 vorgeschaltet sind und zur Zerkleinerung zumindest der fleischigen Zutaten zur Herstellung des Futtermittel-Vorprodukts dienen.
Wenn mehrere Futtermittel-Vorprodukte unterschiedlicher Zusammensetzung zeitgleich hergestellt werden, ist es möglich, mehrsträngige halbfeuchte Futtermittelprodukte 1 mit Strängen unterschiedlich zusammengesetzter Futtermittel-Vorprodukte auszuformen. Die Stränge können bei der Ausformung, beispielsweise durch einen Former 10, insbesondere einen Schneckenformer, ineinander gefahren werden. Es können dabei verschiedene, in Aussehen und Haptik völlig andersartige, halbfeuchte Futtermittelprodukte 1 erhalten werden, beispielsweise solche, bei denen ein Anteil von mindestens einem inneren Strang auf der Längsseite des halbfeuchten Futtermittelprodukts 1 sichtbar ist. Vom Former 10 wird das ausgeformte Futtermittel-Vorprodukt in einen Trockner geleitet, der mit 11 bezeichnet ist. Die Größe der nach der Trocknung erhaltenen halbfeuchten Futtermittelprodukte 1 wird so gewählt, dass sie durch die jeweilige fleischfressende Tierart optimal aufgenommen werden können, beispielsweise beträgt der Durchmesser für halbfeuchte Futtermittelprodukte wie Katzen-Happen etwa 1 cm, während er für Hunde etwa 2 bis 4 cm betragen kann. Das Endprodukt, also das halbfeuchte Futtermittelprodukt 1 wird nach Verlassen des Trockners 11 noch Bearbeitungs- und/oder Abpackeinheiten, hier pauschal mit 12 bezeichnet, zugeführt.

## Patentansprüche

1. Verfahren zur Herstellung eines halbfeuchten Futtermittelprodukts (1) für fleischfressende Tiere, wobei zeitgleich mehrere Futtermittel-Vorprodukte unterschiedlicher Zusammensetzung hergestellt werden, die ein- oder mehrsträngig ausgeformt werden, und wobei
a. ein Kutter (5) zur Herstellung eines Futtermittel-Vorprodukts mit wenigstens folgenden Zutaten beschickt wird, die eine Temperatur aufweisen, die gleich oder geringer ist als +25°C: wenigstens ein Bestandteil der Gruppe Fleisch,
b. die Zutaten zu einem Futtermittel-Vorprodukt mit einem Feuchtigkeits-Gehalt zwischen 30 Gew.-% und 60 Gew.-% gekuttert werden,
c. das gekutterte Futtermittel-Vorprodukt ohne Anwendung von Hitze zum halbfeuchten Futtermittelprodukt (1) ausgeformt wird,
d. gegebenenfalls das ausgeformte Futtermittelprodukt (1) getrocknet wird, bis ein Feuchtigkeitsgehalt zwischen 15 Gew.-% und 50 Gew.-%, insbesondere zwischen 20 Gew.-% und 40 Gew.-%, erreicht ist.

2. Verfahren nach Anspruch 1, **dadurch gekennzeichnet, dass** die Zutaten zur Herstellung des Futtermittel-Vorprodukts vollständig oder teilweise gefroren eingesetzt werden.

3. Verfahren nach Anspruch 1 oder 2, **dadurch gekennzeichnet, dass** den Zutaten zur Herstellung des Futtermittel-Vorprodukts vor dem Kuttern ein oder mehrere Bestandteile der Gruppe: Gemüse, Getreide, Kartoffeln, Glycerin, Lachspulver, Käsepulver, Pansenpulver und/oder Leberwurst, zugesetzt werden.

4. Verfahren nach einem der vorhergehenden Ansprüche, **dadurch gekennzeichnet, dass** in der Futtermittelindustrie übliche Zusatzstoffe beigefügt werden, insbesondere Aromen, natürliche oder synthetische Farbstoffe, inaktivierte Hefe oder Hefeextrakte, Pflanzenextrakte und/oder -konzentrate, Konservierungsstoffe, Zucker und/oder funktionelle Zutaten.

5. Verfahren nach einem der vorhergehenden Ansprüche, **dadurch gekennzeichnet, dass** bei mehrsträngiger Ausformung der Futtermittel-Vorprodukt(e) die Stränge ineinander gefahren werden.

6. Verfahren nach einem der vorhergehenden Ansprüche, **dadurch gekennzeichnet, dass** das halbfeuchte Futtermittelprodukt (1) auf eine Temperatur zwischen 10°C und 40°C abgekühlt wird.

7. Halbfeuchtes Futtermittelprodukt (1) für fleischfressende Tiere erhältlich durch ein Verfahren nach einem der Ansprüche 1 bis 6.

8. Halbfeuchtes Futtermittelprodukt (1) nach Anspruch 7 wobei das Futtermittelprodukt eine Bruchfestigkeit zwischen 28 kPa und 72 kPa und/oder eine Druckfestigkeit zwischen 112 und 129 kPa aufweist.

9. Halbfeuchtes Futtermittelprodukt (1) nach Anspruch 7 oder 8, **dadurch gekennzeichnet, dass** es einen Fettgehalt zwischen 8 Gew.-% und 30 Gew.-%, einen Proteingehalt zwischen 10 Gew.-% und 40 Gew.-%, einen Aschegehalt zwischen 2 und 10 Gew.-% und einen pH-Wert zwischen 5 und 6,5 aufweist.

10. Halbfeuchtes Futtermittelprodukt (1) nach einem der Ansprüche 7 bis 9, **dadurch gekennzeichnet, dass** bei mehrsträngiger, durch ein Ineinanderfahren der Stränge erzeugter Ausformung, mindestens ein Anteil von mindestens einem inneren Strang auf der Längsseite des halbfeuchten Futtermittelprodukts (1) sichtbar ist.

11. Halbfeuchtes Futtermittelprodukt (1) nach Anspruch 10, wobei die Stränge Futtermittel-Vorprodukte unterschiedlicher Zusammensetzung aufweisen.

12. Halbfeuchtes Futtermittelprodukt (1) nach Anspruch 10, wobei die Ausformung eine konzentrische Ausformung ist.

13. Halbfeuchtes Futtermittelprodukt (1) nach einem der Ansprüche 7 bis 12, **dadurch gekennzeichnet, dass** es in einer Folienverpackung, insbesondere einer Schlauchbeutelverpackung oder einer Muldenschalenverpackung, eingeschlossen ist.

14. Halbfeuchtes Futtermittelprodukt (1) nach Anspruch 13, wobei dieses gasdicht verpackt ist.

## Claims

1. Process for the preparation of a semi-moist feed product (1) for carnivorous animals, wherein several feed pre-products of different compositions are prepared simultaneously, which are formed in one or more strands, and wherein
a) a cutter (5) is fed with at least the following ingredients at a temperature equal to or less than +25°C to produce a feed pre-product: at least one ingredient of the meat group,
b) the ingredients are cut into a feed pre-product with a moisture content of between 30 % and 60 % by weight,
c) the cut feed pre-product is formed to a semi-moist feed product (1) without the application of heat,
d) optionally, the formed feed product (1) is dried until a moisture content of between 15 % and 50 % by weight, is obtained, in particular, between 20 % and 40 % by weight.

2. The process according to claim 1, **characterized in that** the ingredients for the production of the feed pre-product are used completely or partially frozen.

3. The method according to claim 1 or 2, **characterized in that** one or more components of the group: vegetables, cereals, potatoes, glycerine, salmon powder, cheese powder, rumen powder and/or liver sausages are added to the ingredients for the preparations of the feed pre-product before cutting.

4. A process according to any one of the preceding claims, **characterized in that** additives commonly used in the animal feed industry are added, in particular flavorings, natural or synthetic colorants, inactivated in yeast or yeast extracts, plant extracts and/or concentrates, preservatives, sugar and/or functional ingredients.

5. The process according to any one of the preceding claims, **characterized in that** in the case of multi-strand formation of the feed pre-product, the strands are run into each other.

6. The process according to any one of the preceding claims, **characterized in that** the semi-moist feed product (1) is cooled to a temperature between 10°C and 40°C.

7. Semi-moist feed product (1) for carnivorous animals, obtainable by a method according to any one of claims 1 to 6.

8. Semi-moist feed product (1) according to claim 7, wherein the feed product has a breaking strength between 28 kPa and 72 kPa and/or having a compressive strength between 112 and 129 kPa.

9. A semi-moist feed product (1) according to claim 7 or 8, **characterized in that** it has a fat content of between 8 % and 30 % by weight, a protein content of between 10 % and 40 % by weight, an ash content of between 2 % and 10 % by weight and a pH value between 5 and 6.5.

10. Semi-moist feed product (1) according to any one of claims 7 to 9, **characterized in that** in the case of multi-strand formation produced by running strands into each other at least a portion of at least one inner strand is visible on the longitudinal side of the semi-moist feed product (1).

11. Semi-moist feed product (1) according to claim 10, wherein the strands comprise feed pre-products of different composition.

12. Semi-moist feed product (1) according to claim 10, wherein the shape is a concentric shape.

13. Semi-moist feed product (1) according to any one of claims 7 to 12, **characterized in that** it is enclosed in a film packaging, in particular, a tubular bag packaging or a trey packaging.

14. Semi-moist feed product (1) according to claim 13, wherein said feed product (1) is packed in a gas-tight manner.

## Revendications

1. Procédé de préparation d'un produit alimentaire semi-humide (1) pour animaux carnivores, dans lequel plusieurs produits préliminaires alimentaires de différentes compositions sont préparés simultanément, qui sont mis en forme d'un ou de plusieurs brins, et dans lequel
a. pour préparer un produit préliminaire d'alimentation animale est chargé avec au moins les ingrédients suivants à une température égale ou inférieure à + 25°C : au moins un composant du groupe des viandes ;
b. les ingrédients sont découpés en un produit préliminaire pour l'alimentation animale ayant une teneur en humidité comprise entre 30 % et 60 % en poids ;
c. le produit préliminaire d'alimentation animale découpé est mis en forme sans application de chaleur, pour donner le produit d'alimentation animale (1) semi-humide,
d. le cas échéant, le produit d'alimentation animale (1) mis en forme est séché jusqu'à ce qu'une teneur en humidité comprise entre 15 % et 50 % en poids, en particulier comprise entre 20 % et 40 % en poids soit atteinte.

2. Procédé selon la revendication 1,
**caractérisé en ce que** les ingrédients pour préparer le produit préliminaire d'alimentation animale sont utilisés complètement ou partiellement sous forme congelée.

3. Procédé selon la revendication 1 ou 2,
**caractérisé en ce qu'**avant la découpe, un ou plusieurs composants sont ajoutés aux ingrédients pour préparer le produit préliminaire d'alimentation animale, qui sont choisis parmi le groupe : légumes, céréales, pommes de terre, glycérine, saumon en poudre, fromage en poudre, rumen en poudre, et/ou charcuterie à base de foie.

4. Procédé selon l'une des revendications précédentes,
**caractérisé en ce que** des additifs usuels dans l'industrie des aliments pour animaux sont ajoutés, en particulier des arômes, des colorants naturels ou synthétiques, de la levure ou des extraits de levure inactivés, des extraits et/ou des concentrés de plantes, des conservateurs, du sucre et/ou des ingrédients fonctionnels.

5. Procédé selon l'une des revendications précédentes,
**caractérisé en ce que** lors d'une mise en forme du ou des produits préliminaires alimentaires en plusieurs brins, les brins sont imbriqués les uns dans les autres.

6. Procédé selon l'une des revendications précédentes,
**caractérisé en ce que** le produit d'alimentation animale (1) semi-humide est refroidi à une température comprise entre 10 °C et 40 °C.

7. Produit d'alimentation animale (1) semi-humide pour animaux carnivores, obtenu par un procédé selon l'une des revendications 1 à 6.

8. Produit d'alimentation animale (1) semi-humide selon la revendication 7,
dans lequel le produit d'alimentation animale présente une résistance à la rupture comprise entre 28 kPa et 72 kPa et/ou une résistance à la pression comprise entre 112 et 129 kPa.

9. Produit d'alimentation animale (1) semi-humide selon la revendication 7 ou 8,
**caractérisé en ce qu'**il comprend une teneur en graisse comprise entre 8 % et 30 % en poids, une teneur en protéine comprise entre 10 % et 40 % en poids, une teneur en cendres comprise entre 2 % et 10 % en poids, et un pH compris entre 5 et 6,5.

10. Produit d'alimentation animale (1) semi-humide selon l'une des revendications 7 à 9,
**caractérisé en ce que** lors d'une mise en forme en plusieurs brins généré par imbrication mutuelle des brins, au moins une part d'au moins un brin intérieur est visible sur le côté longitudinal du produit d'alimentation animale (1) semi-humide.

11. Produit d'alimentation animale (1) semi-humide selon la revendication 10,
dans lequel les brins présentent des produits préliminaires d'alimentation animale de différentes compositions.

12. Produit d'alimentation animale (1) semi-humide selon la revendication 10,
dans lequel la mise en forme est une mise en forme concentrique.

13. Produit d'alimentation animale (1) semi-humide selon l'une des revendications 7 à 12,
**caractérisé en ce qu'**il est enfermé dans un emballage en film, en particulier un emballage en sachet tubulaire ou dans un emballage en coque creuse.

14. Produit d'alimentation animale (1) semi-humide selon la revendication 13,
celui-ci étant emballé de façon étanche aux gaz.
